# EUROPEAN PATENT APPLICATION

(11) **EP 3 563 920 A1**
(43) Date of publication of application: **06.11.2019**
(21) Application number: 17888072.0
(22) Date of filing: 27.12.2017
(51) Int. Cl.: B01D 39/14, B01D 35/06, C02F 1/461, C02F 1/469

(54) **WATER TREATMENT APPARATUS FILTER AND WATER TREATMENT APPARATUS INCLUDING SAME**

(30) Priority: 28.12.2016 KR 20160181278
(71) Applicant: LG Electronics Inc., Seoul 07336 (KR)
(72) Inventor: LEE, Sangduck, Seoul 08592 (KR); CHOI, Yuseung, Seoul 08592 (KR); CHO, Suchang, Seoul 08592 (KR)
(74) Representative: Vossius & Partner Patentanwälte Rechtsanwälte mbB
(86) International application number: PCT/KR2017/015595
(87) International publication number: WO 2018/124752

(57) **Abstract**

A filter for use in a water treatment apparatus and a water treatment apparatus including the same according to the present invention comprise: a current collector; a plurality of activated carbon electrodes, each including an active carbon coating layer which is formed by applying activated carbon to one side or both sides of the current collector and has an uneven part ( 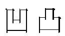 ) formed on a surface thereof; spacers each inserted between the activated carbon electrodes to prevent a short circuit and formed of an insulating material; a plurality of electrode plates respectively connected to one side ends or the other side ends of the plurality of laminated activated carbon electrodes; and a power supply means for supplying currents through the electrode plates to the activated carbon electrodes such that neighboring activated carbon electrodes alternatively form an anode and a cathode, whereby the filter can decrease water hardness and has a high ion removing performance because the uneven part ( 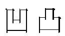 ) increases the specific surface area and water permeability, and an ion exchange membrane is not used and the current collector has a minimized volume, leading to the minimal thickness of the electrode.

## Description

### [Technical Field]

The present invention relates to a filter for a water treatment apparatus and a water treatment apparatus including the same.

### [Background Art]

In general, a water treatment apparatus, such as a water purifier, that processes raw water to generate purified water has been disclosed in various forms. However, recently, deionization manners, such as electro-deionization (EDI), continuous electro deionization (CEDI), or capacitive deionization (CDI), have been spotlighted among manners applied to water treatment apparatuses. Among them, recently, the CDI water treatment system is the most popular.

The CDI manner is to remove underwater ions (contaminants) through the principle of adsorbing ions on the surface of the electrode through electric force.

For example, Korean Patent Registration No. 10-1022257 discloses a CDI-type electrode and a method of manufacturing the same. In detail, the method includes preparing an organic solution slurry including an organic solvent, an ionic resin having a cat ion exchanger, and an electrode active material, an electrode manufacturing step of applying the slurry to a collector to form an active layer, an electrode manufacturing step of preparing organic solution slurry including an organic solvent, ionic resin having an anion exchanger and an electrode active material, and applying the slurry to a current collector to form an active layer, a step of forming an upper anion coating layer by coating the organic solvent, which is obtained by dissolving ionic resin having the anion exchanger, on the electrode, and a step of forming an upper cationic coating layer by coating an organic solution containing ionic resin having a cat ion exchanger on the electrode.

However, when the electrode is manufactured by coating a mixture solution of the electrode active material, the ion exchange solution, the binder, and the solvent, on the current collector, the thickness of the electrode is increased. Accordingly, when electrodes are stacked in a limited module, the volume of the module may be increased. In addition, an unreacted solvent may flow out during the use, so the electrode is not suitable for the treatment of the drinking water. In addition, as the high-price ion exchange resin solution is used, the price of the module may be increased.

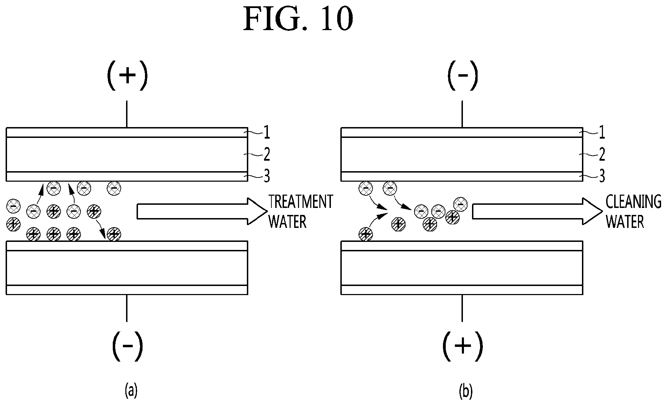

As another example, referring to FIG. 10, when treatment water is allowed to pass between electrodes (positive and negative electrodes) in the state that a voltage is applied to the electrodes as illustrated in FIG. 10A, a negative ion moves to the positive electrode and a positive ion moves to the negative electrode. In other words, adsorption occurs. Ions in the treatment water may be removed through such adsorption.

However, such adsorption continues, and the electrode becomes no longer able to adsorb ions. When a situation reaches this, the electrode is regenerated by separating the ions, which are adsorbed on the electrode, from the electrode as illustrated in FIG. 10B. In this case, the washing water including the ions separated from the electrode is discharged to the outside. Such regeneration may be achieved as no voltage is applied to the electrode or a voltage is applied in opposition to the case of adsorbing the ions.

In order to commercially use such a CDI manner, a large number of electrodes (positive and negative electrodes) are generally stacked. However, according to the CDI manner, the deionization performance is affected by the spacing between the electrodes. In other words, in the CDI manner, as the spacing between the electrodes is increased, the deionization performance is lowered. The reasons are as follows. First, as the spacing between the electrodes is increased, the capacitance of a capacitor is decreased. In general, the capacitance of the capacitor is inversely proportional to the spacing between the electrodes. Second, as the spacing between the electrodes is increased, the treatment water more rapidly flows between the electrodes. When the treatment water rapidly flows between electrodes, it is difficult for the ions in the treatment water to be adsorbed on the electrodes. Even if a large number of electrodes are stacked, it is significantly important to properly maintain the spacing between the electrodes.

However, according to the conventional CDI manner as illustrated in FIG. 10, when an ion exchange membrane 3 is used in addition to the use of a current collector 1 having the plate shape and a carbon electrode 2, the whole thickness of the electrode is increased, but the specific surface area and the permeability are lowered. In other words, according to the conventional CDI manner, it is difficult to minimize the volume of the electrode and to expect high-efficiency ion removal performance.

### [Disclosure]

### [Technical Problem]

The present invention suggests, in order to solve the problem, a filter for a water treatment apparatus, capable of coating, in the form of a thin film, porous activated carbon having a higher specific surface area to a current collector while forming a concavo-convex pattern to increase permeability and increase a water contact area, thereby improving ion removal performance.

The present invention suggests a filter for a water treatment apparatus, which may be configured at a lower price by removing an ion exchange membrane.

The present invention suggests a filter for a water treatment apparatus which is advantageous to be implemented in a compact size by removing an ion exchange membrane to reduce the thickness of an electrode.

The present invention suggests a filter for a water treatment apparatus, capable of reducing the thickness of an electrode by removing an ion exchange membrane, so high-density stacking is possible in a limited module space, thereby improving the performance of removing an underwater ion.

The present invention suggests a filter for a water treatment apparatus, in which stacking is freely performed, so a stacking height may be variously set depending on a required treatment capacity and a required treatment speed.

The present invention suggests a filter for a water treatment apparatus, which is directly applicable to an existing water treatment apparatus without changing the shape or the arrangement structure of the filter applied to the water treatment apparatus.

The present invention suggests a filter for a water treatment apparatus, which may be manufactured in various manufacturing manners and easily manufactured in each of the manufacturing manners to enhance productivity.

The present invention suggests a filter for a water treatment apparatus, and a water treatment apparatus including the same, which may uniformly maintaining an ion removal capability of an activated carbon filter by easily removing ions, which are adsorbed on the activated carbon electrode, from the activated carbon electrode.

### [Technical Solution]

According to the present invention, a filter for a water treatment apparatus may include a plurality of activated carbon electrodes including a current collector and an activated carbon coating layer formed by coating activated carbon on one side or opposite sides of the current collector and having a concavo-convex pattern ( 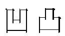 ) formed on surface thereof, a spacer including an insulating material and inserted between the activated carbon electrodes to prevent short, a plurality of electrode plates connected with one end portions or opposite end portions of the activated carbon electrodes stacked, and a power supply unit to apply a current to the activated carbon electrode through the electrode plate such that adjacent activated carbon electrodes have a positive electrode and a negative electrode which are alternately formed. Accordingly, water hardness may be lowered. In addition, high-efficiency ion removal performance may be expected by increasing the specific surface area and the permeability. The volume of the current collector may be minimized by removing the ion exchange membrane, thereby minimizing the thickness of the electrode. In addition, the stacking may be freely performed, so the stacking height may be variously set depending on the required treatment capacity and the required treatment speed.

In addition, the power supply unit may apply the current in one direction when treatment water is supplied to the activated carbon filter unit and allows the ion to be adsorbed on the activated carbon electrode to remove the underwater ion. In addition, the power supply unit may apply a current in an opposite direction to the one direction, when the treatment water is supplied to the activated carbon filter unit, and the ion, which is adsorbed on the activated carbon electrode, is discharged under water to regenerate the activated carbon electrode. Accordingly, the ion removal capability of the activated carbon filter may be uniformly maintained by easily removing the ions adsorbed on the activated carbon electrode.

In addition, the activated carbon coating layer may be formed by coating a mixture of at least two selected from activated carbon, a conducting polymer, or a binder on a surface of the current collector. Accordingly, the ion included in the raw water may receive larger electrostatic attractive force, so the ion included in the raw water may be more firmly adsorbed.

In addition, the mixture may be coated on one surface or opposite side surfaces of the current collector. Accordingly, the adsorption speed and the adsorption performance of the foreign substances may be improved, and the number of current collectors may be reduced, so the thickness of the filter may be reduced, the light filter may be realized, and the manufacturing cost of the filter may be saved.

In addition, the activated carbon coating layer may have the concavo-convex pattern ( 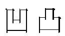 ) formed on the surface thereof by scratching off and removing a portion of the mixture coated on the current collector using a blade, may have the concavo-convex pattern ( 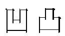 ) formed on the surface thereof by pressing a stamp having a concavo-convex pattern ( 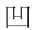 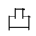 ) with respect to the mixture coated on the current collector, and may have the concavo-convex pattern ( 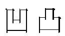 ) formed on the surface thereof by allowing the current collector and the mixture coated on the current collector to pass between a pair of forming rollers. Accordingly, the present invention may be manufactured in various manufacturing manners and easily manufactured in each of the manufacturing manners to enhance productivity of the product.

### [Advantageous Effects]

According to the present invention, the water may be softened by lowering water hardness.

According to an embodiment, high-efficiency ion removal performance may be expected by increasing the specific surface area and the permeability.

According to the present invention, the volume of the current collector may be minimized by removing the ion exchange membrane, thereby minimizing the thickness of the electrode.

According to the present invention, the stacking may is freely performed, so the stacking height may be variously set depending on the required treatment capacity and the required treatment speed.

Accordingly, the ion removal capability of the activated carbon filter may be uniformly maintained by easily removing the ions adsorbed on the activated carbon electrode.

According to the present invention, the number of the current collectors may be minimized by forming the activated carbon coating layers on opposite surfaces of the current collector, and the filter may be manufactured in a slim and light structure. The costs of the filter may be reduced.

The present invention may be directly applied to the existing water treatment apparatus without changing the shape or the arrangement structure of the filter applied to the water treatment apparatus.

The present invention may be manufactured in various manufacturing manners and easily manufactured in each of the manufacturing manners to enhance productivity of the product.

In addition, according to the present invention, the slim electrode may be manufactured, so the slim filter and the slim water treatment apparatus employing the filter may be realized. Further, various effects may be understood as being produced through the features suggested in the detailed embodiments of the present invention.

### [Description of Drawings]

FIG. 1 is a perspective view illustrating a water treatment apparatus according to the present invention.
FIG. 2 is a view illustrating the piping feature of the water treatment apparatus illustrated in FIG. 1.
FIG. 3 is a schematic view illustrating a filter for the water treatment apparatus according to an embodiment of the present invention.
FIG. 4 is a schematic view illustrating that water is purified through a filter for the water treatment apparatus illustrated in FIG. 3.
FIG. 5 is a schematic view illustrating that the filter for the water treatment apparatus illustrated in FIG. 3 is regenerated.
FIG. 6 is a schematic view illustrating one example of a procedure of manufacturing an activated carbon electrode which is some component of the present invention.
FIG. 7 is a schematic view illustrating another example of a procedure of manufacturing an activated carbon electrode which is some component of the present invention.
FIG. 8 is a schematic view illustrating still another example of a procedure of manufacturing an activated carbon electrode which is some component of the present invention.
FIG. 9 is a schematic view illustrating a filter for the water treatment apparatus according to an embodiment of the present invention.
FIG. 10 is a schematic view illustrating the state that water is purified and an electrode is regenerated in a conventional CDI manner.

### [Best Mode]

### [Mode for Invention]

Hereinafter, the detailed embodiment of the present invention will be described with reference to accompanying drawings. However, the spirit of the present invention is not limited to embodiments suggested hereinafter, and those skilled in the art, which understand the spirit of the present invention, can easily reproduce another embodiment falling within the scope of the present invention by adding, modifying, and deleting a component.

In the accompanying drawing for the following embodiments, fine parts may be expressed mutually differently according to drawings. In addition, a specified part may not be expressed or exaggeratedly expressed depending on drawings.

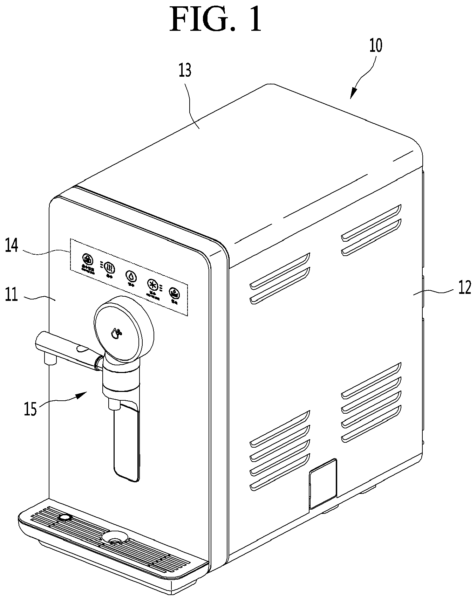

FIG. 1 is a perspective view illustrating a water treatment apparatus according to the present invention.

The water treatment apparatus according to the present invention may include various purification apparatuses such as a water purifier, a water softener, and the like. In addition, the water treatment apparatus may correspond to a purifying unit installed in a washing machine, a dishwasher, a refrigerator, or the like.

Although the following description will be made regarding a water purifier by way of example, the scope of the present invention is not limited thereto, and the water treatment apparatus may have various embodiments within the scope that ions included in raw water introduced from the outside are electrically adsorbed and discharged.

Referring to FIG. 1, the water treatment apparatus according to the present invention may be provided as a water purifier by way of example.

The water purifier is to purify the water directly supplied from an external water source, and then to cool, heat, and extract the water. For example, the water purifier may be a direct water type water purifier. In this case, the direct water type water purifier refers to a water purifier having the structure in which the purified water is extracted without a water tank for storing the purified water when the user extracts the water.

In addition, a water purifier 10 may have an outer appearance formed by combining a plurality of panels with each other. In more detail, the water purifier 10 may have a substantially hexahedral shape as a front panel 11 forming a front outer appearance, side panels 12 forming outer appearances of opposite side surfaces, a top surface panel 13 forming a top surface outer appearance, and a base panel forming a bottom surface outer appearance are combined with each other. In addition, a plurality of parts for purifying water are provided in an internal space formed by combining the panels.

The front panel 11 is provided thereon with an operation display unit 14 to allow a user to input an operation command of the water purifier 10 and to display the operation state of the water purifier 10.

The operation display unit 14 is provided in the form of a plurality of buttons or a touch screen such that light is irradiated to each button. In other words, when the user presses or touches the button of the operation display unit 14, the selected button is irradiated with light to allow the user to easily recognize whether the button is selected, and to simultaneously perform the function of the display unit.

The operation display unit 14 includes a button to select the kind of water to be extracted, that is, a button to select cold water, hot water or purified water (water at the room temperature), a button to continuously dispense water, a button to identify a power state of the hot water, and a display unit to display the temperatures of the hot water or the cold water.

In addition, the operation display unit 14 may further include a button to perform an additional function, and some buttons may be omitted from the operation display unit 14.

A water chute 15, which is operable by the user to dispense purified water, is provided below the operation display unit 14. The water chute 15 is provided so that the user may operate the water chute 15 to dispense the purified water. The water chute 15 has a function of opening and closing a water outlet to allow the user to extract the purified water, so the water chute 15 is referred to as an opening/closing device or an opening/closing nozzle.

The water chute 15 is configured to dispense purified water, cold water, or hot water depending on the functions of the water purifier 10 by the operation of the user. In addition, a tray is provided below the water chute 15, in detail, at a front lower end portion of the front panel 11 to receive water dropped from the water chute 15.

The tray is provided in the shape of a hexahedron having an internal space and provided on the top surface thereof with a grill-shaped cover to filter out foreign substances. The tray is movable forward from the front panel 11. Such movement of the tray allows the user to put purified water even in a bottle having a higher height or a container having a wider bottom surface.

In addition, the tray further includes a buoy for checking the level of water contained in the internal space thereof. The user may recognize the timing to empty water from the tray by recognizing such a buoy, thereby improving the convenience of user.

Although not illustrated, a plurality of components including a refrigerant cycle to cool water, a cold water generating unit to generate cold water, and a hot water generating unit to heat water are received inside the panels forming the outer appearance of the water purifier 10.

In detail, the water purifier 10 may include a compressor to compress the refrigerant into a gas-phase refrigerant having a high temperature and high pressure, a condenser to condense the refrigerant discharged from the compressor to a liquid-phase refrigerant having the high temperature and high pressure, and a condensing fan to exchange heat with the condenser.

In addition, the water purifier 10 may further include a filter assembly to filter out foreign substances contained in water supplied from the water supply source. The filter assembly may include a carbon filter.

The water purifier 10 may further include an expansion valve to expand the refrigerant discharged from the condenser to a two-phase refrigerant having a low temperature and low pressure and an evaporator through which the two-phase refrigerant having the low temperature and low pressure, which is subject to the expansion valve, flows.

In addition, the water purifier 10 may further include a cold water generating unit including the evaporator and a cold water pipe through which the cold water flows.

Further, the water purifier 10 may further include a hot-water heater to heat the water to be supplied to a set temperature.

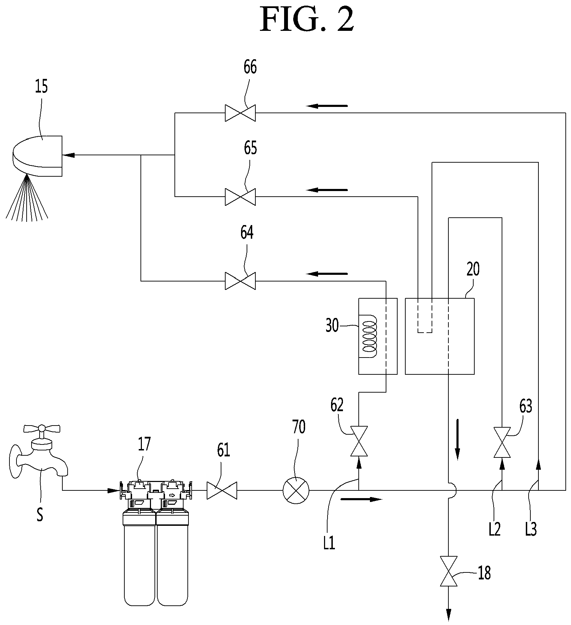

FIG. 2 is a view illustrating the piping feature of the water treatment apparatus illustrated in FIG. 1.

Referring to FIG. 2, a water supply line L may extend from a water supply source S to the water chute 15 of the water purifier 10, and various valves and purified water parts may be connected to the water supply line L.

In more detail, the water supply line L is connected to the water supply source S, for example, a faucet at home, and a filter assembly 17 is disposed at a certain point in the water supply line L to filter out foreign substances from drinking water supplied from the water supply source S.

In addition, a water supply valve 61 and a flow sensor 70 are sequentially arranged on the water supply line L connected to an outlet end of to the filter assembly 17. Therefore, when a supply amount sensed by the flow sensor 70 reaches a set amount, the water supply valve 61 may be controlled to be closed.

In addition, a hot water supply line L1, a cold water supply line L3, and a cooling water supply line L2 may branch from a certain point of the water supply line L extending from the outlet end of the flow sensor 70.

In addition, a purified water dispensing valve 66 is mounted at an end portion of the water supply line L extending from the outlet end of the flow sensor 70, and a hot water dispensing valve 64 is mounted at an end portion of the hot water supply line L1. In addition, a cold water dispensing valve 65 may be mounted at an end portion of the cold water supply line L3, and a cooling water valve 63 may be mounted at a certain point of the cooling water supply line L2. The cooling water valve 63 may adjust an amount of cooling water supplied to a cold water generating unit 20.

In addition, all water supply lines extending from the outlet ends of the hot water dispensing valve 64, the cold water dispensing valve 65, and the purified water dispensing valve 66 are connected to the water chute 15 In addition, as illustrated in drawings, the purified water, the cold water, and the hot water may be configured to be connected to a single outlet, and may be configured to be connected to independent outlets, respectively, according to occasions.

Hereinafter, the processes of supplying the cold water and hot water will be described.

First, in the case of cold water, when the cooling water valve 63 is open and cooling water is supplied to the cold water generating unit 20, the water of the cold water supply line L3 passing through the cold water generating unit 20 is cooled by the cooling water, so the cold water is generated.

In this case, the cooling water supply line L2 may have a refrigerant cycle to cool the cooling water. The refrigerant cycle may include a compressor, a condenser, an expansion valve, an evaporator, and the like.

Thereafter, when the button to select cold water in the operation display unit is pressed and the cold water dispensing valve 65 is open, the cold water may be dispensed through the water chute 15.

Meanwhile, in the case of hot water, water flowing through the hot water supply line L1 is heated by the hot-water heater 30 to generate the hot water. When the button to select hot water in the operation display unit is pressed and the hot water dispensing valve 64 is open, the hot water may be dispensed through the water chute 15.

The water treatment apparatus according to the present invention including the purifier having the above components includes at least one filter to generate purified water from the raw water. The filter will be described later.

Hereinafter, the filter for the water treatment apparatus according to an embodiment of the present invention will be described.

The filter for the water treatment apparatus according to the present invention may refer to one filter or a plurality of filters.

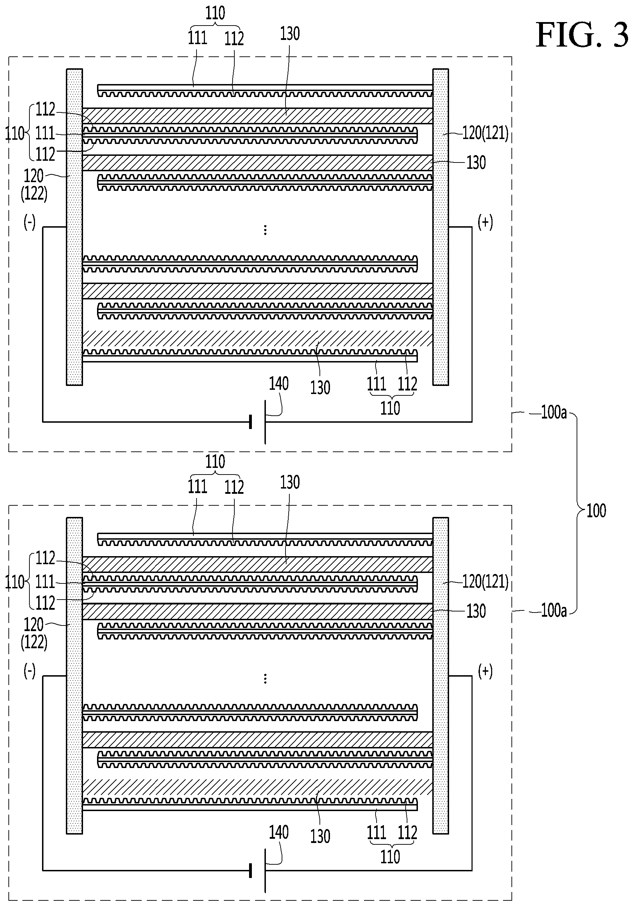

FIG. 3 is a schematic view illustrating the filter for the water treatment apparatus according to an embodiment of the present invention.

Referring to FIG. 3, the filter for the water treatment apparatus may include an activated carbon filter 100.

In addition, the activated carbon filter 100 may be formed by stacking at least one activated carbon filter unit 100a.

In other words, the activated carbon filter 100 may include one activated carbon filter unit 100a or may be formed by stacking a plurality of activated carbon filter units 100a.

The activated carbon filter unit 100a includes a plurality of activated carbon electrodes 110 including a current collector 111 and an activated carbon coating layer 112 formed by coating activated carbon on one side or opposite sides of the current collector 111 and having a concavo-convex pattern ( 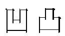 ) formed on surface thereof, a plurality of electrode plates 120 connected with one end portions or opposite end portions of the activated carbon electrodes 110 stacked, a spacer 130 including an insulating material and inserted between the activated carbon electrodes 110 to prevent short, and a power supply unit 140 and 150 to apply a current to the activated carbon electrode 110 through the electrode plate 120 such that adjacent activated carbon electrodes 110 have a positive electrode and a negative electrode alternately formed.

First, the activated carbon electrode 110 includes the current collector 111 and the activated carbon coating layer 112.

The current collector 111, which is provided in the form of a thin film, may include an electric conductor. For example, the current collector 111 may include a graphite foil, and various types of electric conductors may be employed as the current collector 111.

The activated carbon coating layer 112 may be formed on one surface or opposite surfaces of the current collector 111.

The activated carbon coating layer 112 includes activated carbon. Accordingly, when the foreign substances of the raw water is adsorbed on the activated carbon coating layer 112 by electrostatic attraction, the foreign substances are diffused into a hole referred to as a Macro pore formed in the surface of the activated carbon and finally adsorbed on an internal Meso pore or a Micro pore.

According to the present invention, the concavo-convex ( 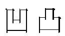 ) pattern may be formed in the activated carbon coating layer 112 to more increase the surface area of the electrode while ensuring the permeability when compared to an activated carbon coating layer provided in the form of a flat surface.

As the surface area of the electrode is increased as described above, an amount of foreign substances adsorbed and the speed of removing the foreign substances may be increased. As the raw water makes contact with the wider surface area, the foreign substances contained in the raw water may be more rapidly and firmly removed, so cleaner water may be supplied to the user.

The stacking number of the activated carbon electrodes 110 may be variously adjusted depending on the desired degree of hardness control. For example, 80 or 100 activated carbon electrodes 110 may be stacked in one activated carbon filter unit 100a. According to the present invention, an ion exchange membrane may be removed, so the thickness of the activated carbon electrode 110 may be reduced, and the stacking number of the activated carbon electrodes 110 may be more increased when compared to an existing technology.

According to the present embodiment, the activated carbon coating layer 112 may be formed only on one surface of the current collector 111. The activated carbon electrode 110 having the activated carbon coating layer 112 formed only one surface of the current collector 111 may be disposed at the upper most part and the lower most part of the activated carbon filter unit 100a.

In this case, the activated carbon electrode 110 disposed at the upper most part is disposed such that the activated carbon coating layer 112 faces downward, and the activated carbon electrode 110 disposed at the lower most end is disposed such that the activated carbon coating layer 112 faces upward.

In addition, activated carbon coating layers 112 may be formed on opposite surfaces of the current collector 111. The activated carbon electrode 110 having the activated carbon coating layers 112 formed on opposite surfaces of the current collector 111 may be disposed at the center of the activated carbon filter unit 100a except for at the upper most part and the lower most part of the activated carbon filter unit 100a.

When the activated carbon coating layers 112 are formed on opposite surfaces of the current collector 111 as described above, the foreign substances included in the raw water may be adsorbed on opposite sides of the current collector 111. Accordingly, the speed of adsorbing the foreign substances and the performance of adsorbing the foreign substances may be enhanced.

In addition, since the activated carbon coating layers 112 are formed on opposite sides of one current collector 111, the number of the current collectors 111 may be reduced, the light activated carbon filter unit 100a may be realized, and the manufacturing cost of the activated carbon filter unit 100a may be saved. In addition, the stacking number of the activated carbon electrodes 110 may be increased.

The spacer 130 may be interposed between the activated carbon electrodes 110. The spacer 130 makes the spacing between the activated carbon electrodes 110 to prevent the short of the activated carbon electrodes 110. In addition, the raw water may be purified while passing through the activated carbon electrodes 110 via the spacer 130.

Accordingly, the spacer 130 may include an insulator and a permeable material, to prevent the short between the activated carbon electrodes 110, and may provide a fluid passage through which the raw water proceeding to the purified water passes. For example, the spacer 130 may be formed of a nylon material.

A pair of electrode plates 120 may be provided and connected with one ends or opposite ends of a plurality of activated carbon electrodes 110, which are stacked, and may include an electric conductor. For example, the electrode plate 120 may include a graphite foil.

In addition, at least two electrode plates 120 may be provided.

The details of the connection between the electrode plate 120 and the activated carbon electrode 110 will be described together with power supply units 140 and 150 to be described below.

The power supply units 140 and 150 may include a power source 140 and a wire 150.

However, in the power source 140, a voltage may be applied within a range in which ion adsorption is possible, without decomposing the raw water. For example, the power source 140 may apply a voltage of 1.5 V or less.

Meanwhile, the electrode plate 120 stands for a positive electrode or a negative electrode depending on the direction of a current flowing through the power supply unit 140 and 150.

In the present embodiment, the electrode plate 120 may include a first electrode plate 121 and a second electrode plate 122 spaced apart from each other.

For example, as illustrated in FIG. 3, when the first electrode plate 121 disposed at the right side of the drawing is a positive electrode (+), the second electrode plate 122 disposed at the left side of the drawing may be a negative electrode.

To the contrary, when the first electrode plate 121 disposed at the right side of the drawing is the negative electrode (-), the second electrode plate 122 disposed at the left side of the drawing may be a positive electrode (+).

As described above, the first electrode plate 121 and the second electrode plate 122 disposed on opposite sides of the activated carbon electrode 110 represent positive and negative electrodes, respectively, depending on the direction that the current flows.

Hereinafter, the electrode plate 120 at which the positive electrode is formed is referred to as a positive electrode, and the electrode plate 120 at which the negative electrode is formed is referred to as a negative electrode.

Adjacent activated carbon electrodes of the plurality of activated carbon electrodes 110, which are stacked, have to be alternately formed at the positive electrode and the negative electrode. The meaning of "adjacent" refers to that the adjacent activated carbon electrodes are close to each other while interposing a spacer therebetween. In other words, the activated carbon electrode 110 disposed at the upper most part of the drawing may be adjacent to an activated carbon electrode 110, which is positioned right thereunder, while interposing the spacer 130 therebetween.

In order for the adjacent activated carbon electrodes 110 to be alternately formed on the positive and negative electrodes, positive and negative electrodes have to be formed at the electrode plates 120 disposed at opposite sides of the activated carbon electrode 110, and the adjacent activated carbon electrodes 110 of the plurality of activated carbon electrodes 110, which are stacked, has to be alternately connected with the positive electrode and the negative electrode, respectively.

For example, as illustrated in FIG. 3, when the positive electrode is formed at the right side of the drawing and the negative electrode is formed at the left side of the drawing, the first activated carbon electrode 110 disposed at the upper most part of the drawing may be connected with the positive electrode at the right side of the drawing and the second activated carbon electrode 110 disposed under the first activated carbon electrode 110 may be connected with the negative electrode at the left side of the drawing. In addition, the third activated carbon electrode 110 disposed under the second activated carbon electrode 110 may be connected with the positive electrode at the right side and the fourth activated carbon electrode 110 disposed under the third activated carbon electrode 110 may be connected with the negative electrode at the left side of the drawing.

In this case, the activated carbon electrode 110 connected with the positive electrode is electrically insulated from the negative electrode, and the activated carbon electrode 110 connected with the negative electrode is electrically insulated from the positive electrode.

In addition, even if the positive electrode is present at the right side of the drawing and the negative electrode is present at the left side of the drawing, the activated carbon electrode 110 disposed at the upper most part of the drawing may be connected with the negative electrode at the left side and the activated carbon electrode 110, which is disposed under the activated carbon electrode 110 disposed at the upper most part of the drawing, may be connected with the positive electrode at the right side.

As another example, when the negative electrode is present at the right side of the drawing and the positive electrode is present at the left side of the drawing, the activated carbon electrode 110 disposed at the upper most part of the drawing may be connected with the positive electrode at the left side and the activated carbon electrode 110 disposed, which is disposed under the activated carbon electrode 110 disposed at the upper most part of the drawing, may be connected with the negative electrode at the right side.

In addition, even if the negative electrode is present at the right side of the drawing and the positive electrode is present at the left side of the drawing, the activated carbon electrode 110 disposed at the upper most part of the drawing may be connected with the negative electrode at the left side and the activated carbon electrode 110, which is disposed under the activated carbon electrode 110 disposed at the upper most part of the drawing may be connected with the positive electrode at the right side.

In this case, the activated carbon electrode 110 connected with the positive electrode is electrically insulated from the negative electrode, and the activated carbon electrode 110 connected with the negative electrode is electrically insulated from the positive electrode.

For example, a negative electrode is spaced apart from the activated carbon electrode 110 connected with the positive electrode such that the activated carbon electrode 110 connected with the positive electrode is electrically insulated from the negative electrode. In addition, the positive electrode is spaced apart from the activated carbon electrode 110 connected with the negative electrode such that the positive electrode is electrically insulated from the activated carbon electrode 110 connected with the negative electrode.

Hereinafter, description will be made regarding the structure in which adjacent activated carbon electrodes 110 of the plurality of activated carbon electrodes 110 are alternately connected with the positive electrode and the negative electrode.

For example, when electrodes are formed at opposite end portions of the activated carbon electrode 110, the activated carbon electrode 110 disposed at the upper most part may have a connector protruding to one side from one end portion thereof, and the second activated carbon electrode 110 may have a connector protruding to an opposite side from an opposite end portion thereof. Hereinafter, an odd-numbered activated carbon electrode 110 may have a connector protruding to one side from one end portion thereof, and an even-numbered activated carbon electrode 110 may have a connector protruding to an opposite side from an opposite end portion thereof.

In this state, an electrode formed at the one side may be connected with the connector of the odd-numbered activated carbon electrode 110 protruding to the one side, and an electrode formed at the opposite side may be connected with the connector of the even-numbered activated carbon electrode 110 protruding from the opposite side.

In this case, the one side and the opposite side may refer to directions opposite to each other or may refer to directions perpendicular to each other.

As another example, when electrodes are formed in front of and back of one side of the activated carbon electrode 110, the first activated carbon electrode 110 disposed at the upper most part of the drawing may have a connector protruding to the one side from one-side front portion thereof and the second activated carbon electrode 110 formed under the first activated carbon electrode 110 may have a connector protruding to the one side from one-side rear portion thereof. Hereinafter, an odd-numbered activated carbon electrode 110 may have a connector protruding to one side from one-side front portion thereof, and an even-numbered activated carbon electrode 110 may have a connector protruding to one side from the one-side rear portion thereof.

In this state, the electrodes formed in front of the one side may be connected with all connectors of the odd-numbered activated carbon electrodes 110, which protrudes to the one side from one-side front portion thereof, and the electrodes formed in back of the one side may be connected with all connectors of the even-numbered activated carbon electrode 110, which protrude to the one side from one-side rear portion thereof.

Besides, the structure in which the adjacent activated carbon electrodes 110 of the plurality of activated carbon electrodes 110, which are stacked, are alternately connected with the positive electrode and the negative electrode may bring various embodiments.

When the adjacent activated carbon electrodes 110 of the plurality of activated carbon electrodes 110 are alternately formed on the positive electrode and the negative electrode, ions, such as heavy metals, contained in raw water passing between the activated carbon electrodes 110 separated from each other by the spacer 130 may be adsorbed and removed.

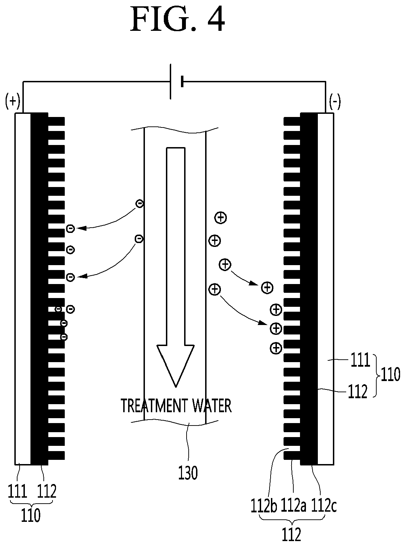

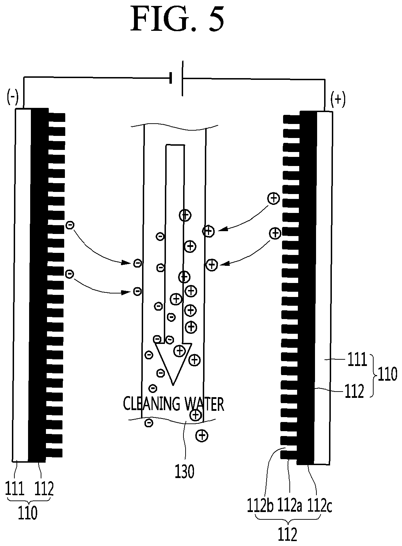

FIG. 4 is a schematic view illustrating that water is purified through a filter for the water treatment apparatus illustrated in FIG. 3, and FIG. 5 is a schematic view illustrating that the filter for the water treatment apparatus illustrated in FIG. 3 is regenerated.

First, referring to FIG. 4, when a positive electrode is formed at the electrode plate 120 disposed at the left side of the drawing and a negative electrode is formed at the electrode plate 120 disposed at the right side of the drawing, the activated carbon electrode 110 disposed at the left side of the drawing is positively charged, and the activated carbon electrode 110 disposed at the right side of the drawing is negatively charged. In this state, when the raw water is allowed to pass between the activated carbon electrodes 110, the negative ions (-) contained in the raw water are adsorbed on the activated carbon electrode 110 at the left side positively charged, and the positive ions (+) contained in the raw water are adsorbed on the activated carbon electrode 110 at the right side negatively charged.

As the negative ions (-) and the positive ions (+) contained in the raw water are adsorbed and removed through the above process, the raw water may be purified.

To the contrary, when a positive electrode is formed at the electrode plate 120 disposed at the right side of the drawing and a negative electrode is formed at the electrode plate 120 disposed at the left side of the drawing, the activated carbon electrode 110 disposed at the right side of the drawing is positively charged, and the activated carbon electrode 110 disposed at the left side of the drawing is negatively charged. In this state, when the raw water is allowed to pass between the activated carbon electrodes 110, the negative ions (-) contained in the raw water are adsorbed on the activated carbon electrode 110 at the right side positively charged, and the positive ions (+) contained in the raw water are adsorbed on the activated carbon electrode 110 at the left side negatively charged.

In this case, the raw water may easily pass between the activated carbon electrodes 110 through the spacer 130, which has a permeable property, interposed between the activated carbon electrodes 110, thereby preventing short-circuiting and securing the flow passage.

However, as the adsorption continues, when the number of ions adsorbed on the activated carbon electrode 110 increases, the activated carbon electrode 110 reaches a state in which the activated carbon electrode 110 does not adsorb ions any more. When the activated carbon electrode 110 reaches the state, it is necessary to separate the adsorbed ions from the activated carbon electrode 110 to regenerate the activated carbon electrode 110 as illustrated in FIG. 5.

To regenerate the activated carbon electrode 110 as described above, the supply of a current may be cut off, or a current may be allowed to flow in a direction opposite to the direction of a current applied when ions are adsorbed on the activated carbon electrode 110.

For example, as illustrated in FIG. 4, in the state that the negative ions (-) contained in the raw water are adsorbed on the activated carbon electrode 110 positively charged and disposed at the left side, and the positive ions (+) contained in the raw water are adsorbed on the activated carbon electrode 110 negatively charged and disposed on the right side, the activated carbon electrode 110 disposed at the left side of the drawing is negatively charged and the activated carbon electrode 110 disposed at the right side of the drawing is positively charged, in order to regenerate the activated carbon electrode 110.

Then, the negative ions (-) adsorbed on the activated carbon electrode 110 at the left side in the water purifying process are separated from the activated carbon electrode 110, which is negatively charged, at the left side. In addition, the positive ions (+) adsorbed on the activated carbon electrode 110, which is positively charged, at the right side in the water purifying process are separated from the activated carbon electrode 110 at the right side.

The position ions (+) and the negative ions (-) separated from both activated carbon electrode 110 are discharged to the outside together with the cleaning water as described above,

When the ions adsorbed on the activated carbon electrode 110 are removed through the process of cleaning the activated carbon electrode 110, the ion removal capability of the activated carbon filter unit 100a is regenerated, so the ion removal capability is uniformly maintained.

The activated carbon filter unit 100a configured as described above may constitute, in the structure of a single body, the activated carbon filter 100, or a plurality of activated carbon filter units 100a may be provided and stacked in several layers to constitute the activated carbon filter 100.

When the activated carbon filter 100 described above is used, since underwater ions are quickly removed, the hardness of the water is lowered. Accordingly, water may be softened.

In addition, the ion exchange membrane, which is essentially provided to primarily remove the ions, may be removed, thereby minimizing the volume of the current collector. Accordingly, the thickness of the electrode may be minimized. The stacking may is freely performed, so the stacking height may be variously set depending on the required treatment capacity and the required treatment speed.

Although the above description has been made in that the ion exchange membrane is removed, the scope of the present invention is not limited thereto. If necessary, the ion exchange membrane may be selectively used to more increase the ion removal rate of the activated carbon filter 100.

When the ion exchange membrane is used as described above, the ion exchange membrane may be disposed between the spacer 130 and the activated carbon electrode 110.

Referring back to FIGS. 4 and 5, a concavo-convex pattern ( 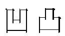 ) formed on the activated carbon coating layer 112 may have the curved, inclined, or rectangular shape in the range in which the thickness difference is made in the thickness direction of the activated carbon coating layer 112 according to various embodiments. The concavo-convex pattern ( 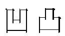 ) may be uniformly or irregularly formed on the activated carbon coating layer 112.

For example, the concavo-convex pattern ( 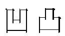 ) formed on the activated carbon coating layer 112 may include a protrusion 112a and a groove 112b formed concavely when compared to the protrusion 112a.

The activated carbon coating layer 112 may include a base part 112c uniformly coated on the surface of the current collector 111 and the protrusion 112a and the groove 12b may be formed on the base part 112c.

Meanwhile, the activated carbon electrode 110 configured as described above may be manufactured in various manners well known to those skilled in the art.

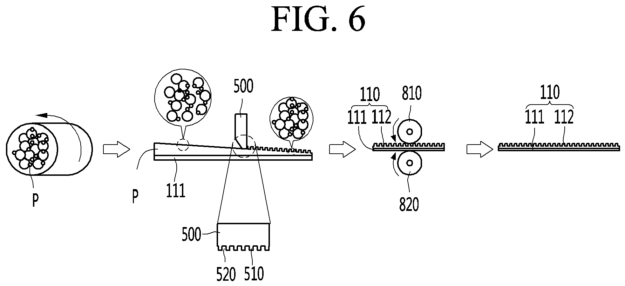

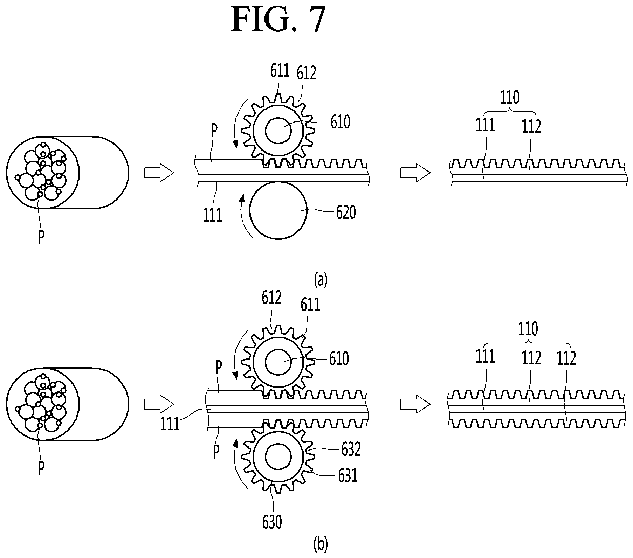

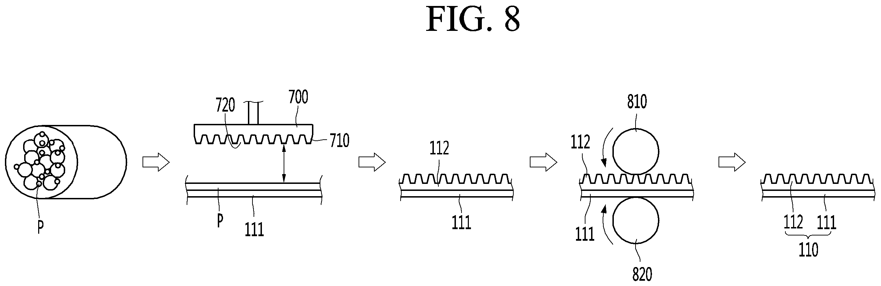

FIG. 6 is a schematic view illustrating one example of a procedure of manufacturing an activated carbon electrode which is some component of the present invention, FIG. 7 is a schematic view illustrating another example of a procedure of manufacturing an activated carbon electrode which is some component of the present invention, and FIG. 8 is a schematic view illustrating still another example of a procedure of manufacturing an activated carbon electrode which is some component of the present invention.

Hereinafter, the procedure of manufacturing the activated carbon electrode 110 which is some component of the present invention will be described with reference to FIGS. 6 to 8.

Referring to FIGS. 6 to 8, the activated carbon coating layer is formed by coating a mixture "P" of at least two selected from activated carbon, a conducting polymer, or a binder on a surface of the current collector.

For example, the mixture P used to form the activated carbon coating layer 112 may be prepared by mixing the activated carbon and the binder. As another example, the mixture "P" may be provided by mixing the activated carbon, the conducting polymer, and the binder.

The mixture "P" described above is applied to the surface of the current collector 111 with fluidity before hardening.

A conducting polymer means a polymer having electrical conductivity similar to that of a metal conductor. When the conducting polymer is mixed with the activated carbon to form the activated carbon coating layer 112, the activated carbon coating layer 112 may be more closely connected with the current collector 111 by the conducting polymer. Therefore, the positive ions or the negative ions contained in the raw water passing through the spacer 130 are subject to greater electrostatic attractive force, so the positive ions or the negative ions contained in the raw water maybe more firmly adsorbed on the activated carbon coating layer 112.

In this case, the binder may be an eco-friendly binder having a small chemical content.

In the embodiment, the mixture "P" may be applied to one side surface or opposite side surfaces of the current collector 111.

For example, when the mixture "P" is applied only to one side surface of the current collector 111, the activated carbon coating layer 112 may be formed only on one side surface of the current collector 111.

As another example, when the mixture "P" is applied only to opposite side surfaces of the current collector 111, the activated carbon coating layers 112 may be formed on opposite side surface of the current collector 111. In this case, the mixture "P" may be simultaneously coated on opposite side surfaces of the current collector 111 or the mixture "P" may be coated on one side surface of the current collector 111 and then coated on an opposite side surface of the current collector 111.

Referring back to FIG. 6, the activated carbon coating layer 112 may have the concavo-convex pattern ( 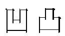 ) formed on the surface thereof by scrapping off and removing a portion of the mixture "P" from the current collector 111 using a blade 500.

In this case, a concavo-convex pattern ( 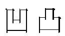 ) including a protrusion 510 and a groove 520 may be formed on the surface of the blade 500 making contact with the mixture "P".

In other words, in the state that the mixture P coated on the current collector 111 has fluidity, when a portion of the mixture "P" is scratched off in a linear direction while moving the blade 500 in a linear line, the concavo-convex pattern ( 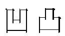 ) may be formed on the surface of the mixture "P" coated on the current collector 111 and then the activated carbon coating layer 112 having the concavo-convex pattern ( 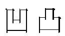 ) may be formed on the surface of the current collector 111 through the firing process or the drying process.

Referring to FIG. 7, the activated carbon coating layer 112 may have the concavo-convex pattern ( 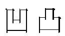 ) formed on the surface thereof by allowing the current collector 111 and the mixture "P" coated on the current collector 111 to pass between a pair of forming rollers 610 and 630.

In this case, a concavo-convex pattern ( 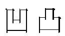 ) including protrusions 611 and 631 and grooves 612 and 632 may be formed on the surfaces of forming rollers 610 and 630 making contact with the mixture "P".

In other words, in the state that the mixture P coated on the current collector 111 has fluidity, when the current collector 111 and the mixture "P" coated on the current collector 111 are allowed to pass between the pair of forming rollers 610 and 630 having the concavo-convex pattern ( 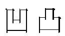 ), the concavo-convex pattern ( 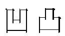 ) is formed on the surface of the mixture "P" coated on the current collector 111. Thereafter, when the result is subject to the firing process or the drying process, the activated carbon coating layer 112 having the concavo-convex pattern ( 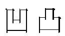 ) may be formed on the surface of the current collector 111.

In this case, when the mixture "P" is coated only on one side of the current collector 111, the current collector 111 and the mixture "P" coated on the current collector 111 may pass between the roller 610 having the concavo-convex pattern ( 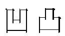 ) and the roller 620 having no concavo-convex pattern ( 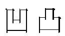 ).

In this case, the roller 610 having the concavo-convex pattern ( 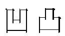 ) forms the concavo-convex pattern ( 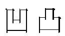 ) on the mixture P while making contact with the mixture "P", and the roller 620 having no concavo-convex pattern ( 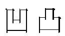 ) supports the current collector 111 while making contact with the current collector 111.

When the mixture "P" is coated on opposite side surfaces of the current collector 111, the current collector 111 and the mixture P coated on the current collector 111 may pass between the pair of rollers 610 and 630 having the concavo-convex pattern ( 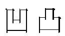 ).

In this case, the pair of rollers 610 and 630 having the concavo-convex pattern ( 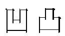 ) make contact with mixtures "P" coated on opposite sides of the current collector 111 to form the concavo-convex patterns ( 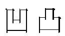 ) on the mixtures "P" coated on the opposite sides.

Referring to FIG. 8, the activated carbon coating layer 112 may have the concavo-convex pattern ( 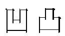 ) formed on the surface thereof by pressing a stamp 700 having the concavo-convex pattern ( 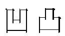 ) to the mixture "P" coated on the current collector 111.

In this case, a concavo-convex pattern ( 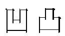 ) including a protrusion 710 and a groove 720 may be formed on the surface of the stamp 700 making contact with the mixture "P".

In other words, in the state that the mixture P coated on the current collector 111 has fluidity, when the stamp 700 is moved up and down for stamping the mixture "P" coated on the current collector 111, the concavo-convex pattern ( 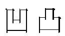 ) may be formed on the surface of the mixture "P" coated on the current collector 111 and then the activated carbon coating layer 112 having the concavo-convex pattern ( 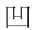 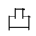 ) may be formed on the surface of the current collector 111 through the firing process or the drying process.

In addition, the concavo-convex pattern ( 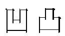 ) may be formed on the activated carbon coating layer 112 in various manners of forming the concavo-convex pattern ( 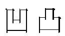 ).

Referring back to FIGS. 6 and 7, in the state that the mixture "P" and the current collector 111 having the concavo-convex pattern ( 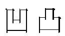 ) formed in various manners have the fluidity, the mixture "P" and the current collector 111 pass between a pair of pressing rollers 810 and 820 rotating while being engaged with each other, and are pressed, so the thickness may be adjusted.

In this case, the surfaces of the pressure rollers 810 and 820 are in a smooth state.

The activated carbon electrode 110 pressed to have the thickness adjusted while passing between the pair of pressing rollers 810 and 820 is subject to the firing process or the drying process, so the current collector 111 and the activated carbon coating layer 112 may be integrally fixed to each other.

As described above, when the pressing is performed through the pressing rollers 810 and 820, the current collector 111 and the activated carbon coating layer 112 are more firmly in close contact with each other to enhance coupling force. In addition, the air gaps of the activated carbon coating layer 112 are removed, so the density of the activated carbon coating layer 112 is improved to improve durability.

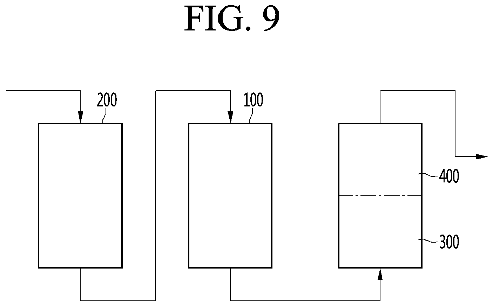

FIG. 9 is a schematic view illustrating the filter for the water treatment apparatus according to an embodiment of the present invention.

Referring to FIG. 9, the water treatment apparatus filter may further include a pre-carbon block filter 200 which purifies water introduced from the outside and then supplies the water to the activated carbon filter 100.

In other words, the raw water introduced from the outside may be preliminarily filtered while passing through the pre-carbon block filter 200 and then filtered while passing through the activated carbon filter 100, before supplied to the activated carbon filter 100.

When the pre-carbon block filter 200 is provided as described above, particulate matter and organic compounds contained in the raw water may be more reliably removed.

In addition, the water treatment apparatus filter may further include a post-carbon block filter 400 which receives, purifies, and then discharges water output through the activated carbon filter 100.

In other words, the water output through the activated carbon filter 100 may be additionally filtered while passing through the post-carbon block filter 400 without directly being supplied to a user, and then may be supplied to the user.

When the post-carbon block filter 400 is provided, foreign substances may be more firmly removed, so the water taste may be improved.

In addition, the filter may further include an UF(ultrafiltration) membrane filter 300 which receives, purifies, and then discharges water output through the activated carbon filter 100.

In other words, the water output through the activated carbon filter 100 may be additionally filtered while passing through the UF membrane filter 300 without directly being supplied to a user, and then may be supplied to the user.

When the UF membrane filter 300 is provided as described above, viruses and bacteria in the water may be more reliably removed.

In the present embodiment, the water, which is output through the activated carbon filter 100, is discharged after sequentially passing through the UF membrane filter 300 and the post-carbon block filter 400. The UF membrane filter 300 and the post-carbon block filter 400 may be arranged in a longitudinal direction and installed in one filter housing.

When the UF membrane filter 300 and the post-carbon block filter 400 are aligned in line with each other inside one filter housing, the filtering efficiency may be enhanced, and the flow rate may be maintained.

In addition, the present invention may be directly applied through simple work of replacing an existing filter with new one without expanding the filter installation space formed in the water treatment apparatus.

In addition, the volume of the filter may be reduced to increase the space utilization. Further, the slim water treatment apparatus may be realized.

Although not illustrated, the filter for the water treatment apparatus may include a plurality of activated carbon filters 100.

When the plurality of activated carbon filters 100 are provided as described above, the raw water passes through the activated carbon filters 100 several times. Accordingly, various ions contained in the raw water may be more firmly adsorbed on and removed from the activated carbon electrode 100.

Accordingly, the number of the activated carbon filters 100 may be freely increased or decreased depending on the state of the raw water and required water purification performance.

Hereinafter, the procedure of purifying the raw water introduced from the outside by the filter for the water treatment apparatus will be described according to embodiment 1.

### <Embodiment 1>

Referring to FIG. 9, water for treatment, which is introduced from the outside, passes through the pre-carbon block filter 200. In this process, particulate matters and organic compounds contained in the treatment water are removed, and the treatment water is primarily purified. Thereafter, the treatment water subject to the primary purification passes through the activated carbon filter 100. In this process, positive ions, negative ions, and charged particles contained in the treatment water are adsorbed and removed on the activated carbon filter 100, thereby performing secondary purification for the treatment water. Thereafter, the treatment water subject to the secondary purification passes through a high-specification UF membrane filter 300. In this process, the viruses and bacteria contained in the treatment water are removed, thereby performing tertiary purification for the treatment water. Thereafter, the treatment water subject to the tertiary purification passes through the post-carbon block filter 400. In this process, the foreign substances contained in the treatment water are further removed, thereby performing fourth purification for the treatment water.

As described above, the treatment water passes through the filter including the pre-carbon block filter 200, the activated carbon filter 100, the UF membrane filter 300, and the post-carbon block filter 400, thereby lowering the hardness in the water, firmly removing foreign substances including harmful underwater microorganism, and improving water taste.

## Claims

1. A filter for a water treatment apparatus to remove and discharge an underwater ion by adsorbing an ion of an introduced water, the filter comprising:
at least one activated carbon filter unit stacked,
wherein the at least one activated carbon filter unit includes:
a plurality of activated carbon electrodes including a current collector and an activated carbon coating layer formed by coating activated carbon on one side or opposite sides of the current collector and having a concavo-convex pattern ( 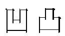 ) formed on a surface thereof;
a spacer including an insulating material and inserted between the activated carbon electrodes to prevent short;
a plurality of electrode plates connected with one end portions or opposite end portions of the plurality of activated carbon electrodes which are stacked; and
a power supply unit to apply a current to the activated carbon electrode through the electrode plate such that adjacent activated carbon electrodes have a positive electrode and a negative electrode which are alternately formed.

2. The filter of claim 1, wherein the electrode plate includes a first electrode plate and a second electrode plate spaced apart from each other, and
wherein the adjacent activated carbon electrodes are connected with mutually different electrode plates.

3. The filter of claim 1, wherein the power supply unit applies the current in one direction when treatment water is supplied to the activated carbon filter unit and allows the ion to be adsorbed on the activated carbon electrode to remove the underwater ion.

4. The filter of claim 3, wherein the power supply unit applies a current in an opposite direction to the one direction, when the treatment water is supplied to the activated carbon filter unit, and discharges the ion, which is adsorbed on the activated carbon electrode, under water to regenerate the activated carbon electrode.

5. The filter of claim 1, wherein the activated carbon coating layer is formed by coating a mixture of at least two selected from activated carbon, a conducting polymer, or a binder on a surface of the current collector.

6. The filter of claim 5, wherein the mixture is coated on one surface or opposite surfaces of the current collector.

7. The filter of claim 5, wherein the activated carbon coating layer has the concavo-convex pattern ( 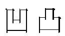 ) formed on the surface thereof by scratching off and removing a portion of the mixture, which is coated on the current collector, using a blade.

8. The filter of claim 5, wherein the activated carbon coating layer has the concavo-convex pattern ( 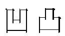 ) formed on the surface thereof by pressing a stamp having a concavo-convex pattern ( 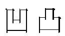 ) with respect to the mixture coated on the current collector.

9. The filter of claim 5, wherein the activated carbon coating layer has the concavo-convex pattern ( 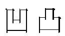 ) formed on the surface thereof by allowing the current collector and the mixture coated on the current collector to pass between a pair of forming rollers having a concavo-convex pattern ( 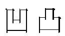 ).

10. The filter of one of claims 7 to 9, wherein the activated carbon electrode having the concavo-convex pattern ( 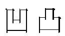 ) is pressed and adjusted in thickness by passing between a pair of pressure rollers rotating while being engaged with each other.

11. A water treatment apparatus comprising:
at least one filter to remove a foreign substance from raw water that is introduced,
wherein the filter is a filter according to one of claims 1 to 10.

12. The water treatment apparatus of claim 11, wherein the filter is installed in a water supply line to supply the raw water, and
wherein purified water, which is output through the filter, is supplied to a user along the water supply line connected with an outlet end of the filter.

13. The water treatment apparatus of claim 12, further comprising:
a hot water supply line branching from the water supply line, through which the purified water flows, and provided thereon with a hot water heater to heat the purified water; and
a cold water supply line branching from the water supply line, through which the purified water flows, and provided thereon with a cold water generating module to cool the purified water.

14. The water treatment apparatus of claim 13, wherein each water supply line is provided thereon with a valve to control flow of water.

15. The water treatment apparatus of claim 13, wherein the purified water, hot water, and cold water are supplied to a user through a single air outlet.
